(19) Europäisches Patentamt
European Patent Office
Office européen des brevets

(11) EP 4 549 001 A1

(12) EUROPEAN PATENT APPLICATION

(43) Date of publication:
**07.05.2025 Bulletin 2025/19**

(21) Application number: **23306893.1**

(22) Date of filing: **31.10.2023**

(51) International Patent Classification (IPC):
***B01D 53/62** (2006.01)* ***B01D 53/80** (2006.01)*
***C04B 28/04** (2006.01)* ***C04B 40/02** (2006.01)*

(52) Cooperative Patent Classification (CPC):
(C-Sets available)
**B01D 53/80; B01D 53/62; C04B 7/364; C04B 7/367; C04B 28/04; C04B 40/0231; C04B 40/0236; F23J 15/02;** B01D 53/81; B01J 20/04; F23J 2215/10; F23J 2215/20; F23J 2215/50; F23J 2215/60; F23J 2219/50
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Holcim Technology Ltd**
**6300 Zug (CH)**

(72) Inventors:
- **FAURE, Jean-Michel**
  **38070 SAINT-QUENTIN-FALLAVIER (FR)**
- **LAMERCERIE, Nathalie**
  **38070 SAINT QUENTIN FALLAVIER (FR)**
- **DYKMAN, Mélanie**
  **38070 SAINT QUENTIN FALLAVIER (FR)**
- **GEORGES, Sébastien**
  **38070 SAINT QUENTIN FALLAVIER (FR)**

(74) Representative: **Regimbeau**
**20, rue de Chazelles**
**75847 Paris Cedex 17 (FR)**

# (54) METHOD OF CAPTURING AND SEQUESTERING CARBON DIOXIDE BY MEANS OF A CARBONATABLE MINERAL FOAM

(57) The invention concerns a method of capturing and sequestering carbon dioxide ($CO_2$) contained in a gaseous environment by means of a carbonatable mineral foam, the method comprising exposing a slurry of foamed cement or a set slurry of foamed cement to a gaseous environment containing carbon dioxide in an amount higher than 500 ppm, the slurry of foamed cement comprising water and a cement.

EP 4 549 001 A1

(52) Cooperative Patent Classification (CPC): (Cont.)

C-Sets
**C04B 28/04, C04B 14/14, C04B 14/28, C04B 18/141, C04B 18/149, C04B 38/106, C04B 40/0231;**
**C04B 28/04, C04B 14/28, C04B 18/141, C04B 18/149, C04B 38/106, C04B 40/0236, C04B 2103/40;**
**C04B 40/0231, C04B 28/04, C04B 38/106;**
**C04B 40/0236, C04B 28/04, C04B 38/106**

## Description

### Field of the invention

The present invention relates to methods of capturing and sequestering carbon dioxide ($CO_2$) contained in a gaseous environment by means of a carbonatable mineral foam.

### Background of the invention

Controlling and continuously reducing of $CO_2$ emissions has become one of the most urgent issues in the world owing to the tremendous global climate change caused by greenhouse effect.

Cementitious materials industry is an important source of industrial carbon emissions.

Different techniques are disclosed to capture $CO_2$ from the gas effluents in the cement industry such as amine scrubbing or direct separation techniques.

The application WO2022/268869 describes carbonation of a cement paste, of a mortar or a concrete to manufacture a construction element with the possibility to sequester $CO_2$.

The application WO2022/253592 describes a process where $CO_2$ is injected during the preparation of a mineral foam. However, the foam thus produced has poor $CO_2$ sequestering capability.

There is still a need for simple and industrial methods to capture and sequester $CO_2$, especially to treat gaseous effluents.

Surprisingly, the inventors developed a method of capturing and sequestering at a high level carbon dioxide ($CO_2$) contained in a gaseous environment by means of a carbonatable mineral foam.

### Summary of the invention

The invention is directed to a method of capturing and sequestering carbon dioxide ($CO_2$) contained in a gaseous environment by means of a carbonatable mineral foam, the method comprising exposing a slurry of foamed cement or a set slurry of foamed cement to a gaseous environment containing carbon dioxide in an amount higher than 500 ppm, the slurry of foamed cement comprising water and a cement.

The cement preferably further comprises a source of calcium carbonate such as limestone.

The method can comprise the following steps:

(i) separately preparing a slurry of a cement and an aqueous foam, wherein the cement slurry comprises water and a cement;
(ii) contacting the slurry of cement with the aqueous foam to obtain a slurry of foamed cement;
(iii) casting the slurry of foamed cement or filling a cavity with the slurry of foamed cement;
(iv) optionally, leaving the slurry of foamed cement to set, partially or totally;
(v) exposing the slurry of foamed cement obtained after step (iii) or the partially or totally set slurry of foamed cement obtained after step (iv) to a gaseous environment containing carbon dioxide in an amount higher than 500 ppm.

The method can comprise the following steps:

(j) separately preparing a slurry of a cement and a gas-forming liquid comprising a gas-forming agent, wherein the cement slurry comprises water and a cement;
(jj) contacting the slurry of cement with the gas-forming liquid to obtain a foaming cement slurry;
(jjj) casting the foaming cement slurry or filling a cavity with the foaming cement slurry and leaving the foaming slurry to expand to obtain a slurry of foamed cement;
(jjjj) optionally, leaving the slurry of foamed cement to set, partially or totally;
(jjjjj) exposing the slurry of foamed cement obtained after step (jjj) or the partially or totally set slurry of foamed cement obtained after step (jjjj) to a gaseous environment containing carbon dioxide in an amount higher than 500 ppm.

Preferably, the cement comprises limestone in an amount comprised between 5% and 20% by weight of cement.

Preferably, the cement further comprises a mineral addition.

Preferably, the mineral addition is EAF slag, steel slag, or bypass dusts.

Preferably, the mineral addition is EAF slag and the EAF slag content in the cement is comprised between 20% and 85%, preferably between 60% and 80% in weight of the cement.

Advantageously, the aqueous foam in step (i) is produced by combining water and a foaming agent, then introducing a gas, and wherein the foaming agent is preferably an organic protein derivative of animal origin or a synthetic

polymer.

Advantageously, the slurry of foamed cement in steps (iv) or(jjjj) is left to set between 30 minutes and 17 hours, preferably between 1 hour and 6 hours.

Advantageously, the slurry of foamed cement or the partially or totally set slurry of foamed cement is placed in the gaseous environment containing carbon dioxide for a duration comprised between 1 hour and 24 hours, preferably between 1 hour and 6 hours.

The invention is also directed to the method as described above and below, wherein the gaseous environment containing carbon dioxide is a gaseous effluent, such as a gas effluent from cement kiln.

The method as described above and below can be used for capturing nitrogen oxides (NOx), sulfur oxides (SOx) and/or heavy metals contained in the gaseous effluent.

## Brief description of the figures

Figures 1 and 2 respectively illustrate the effect of the duration of setting (hydration) on the $CO_2$ percentage measured by TGA of minerals foams F1, F2 and F3 and on the $CO_2$ percentage captured by said foams after 24 hours of carbonation in 100% $CO_2$ according to a method of the invention.

Figures 3 and 4 respectively illustrate the effect of the duration of setting (hydration) and carbonation on the $CO_2$ percentage measured by TGA of minerals foams F1 and F4-F9, and on the $CO_2$ percentage captured by said foams in 100% $CO_2$ according to a method of the invention.

Figure 5 compares the compressive strength of mineral foams F3 (with EAF slag) and F8 (without EAF slag) before carbonation and after 24h carbonation in 100% $CO_2$.

## Detailed description

### Definitions

Cement: a cement is a hydraulic binder comprising a proportion of at least 50 % by weight of calcium oxide (CaO) and silicon dioxide ($SiO_2$). The cement is preferably a Portland cement as defined in the standard NF-EN-197-1 of April 2012. This standard defines several cement compositions that make use of Portland clinker, and optionally comprise other mineral components such as slag, silica fume, pozzolans (natural and calcined), fly ash (siliceous and calcic) and/or limestone, and calcium sulfate. The cements defined in standard NF-EN197-1 of April 2012 are grouped in 5 different families: CEM I, CEM II, CEM III, CEM IV and CEM V. Cements that belong to the CEM I family contain at least 95 wt.-% of Portland clinker, the other cement families further contain one or several mineral components. Alternatively, the cement can be a CEM I to which one or several additional mineral components are added prior to preparing the cement slurry. The mineral components are defined in paragraph 5.2 of the same standard NF-EN197-1 of April 2012. The cement may optionally further contain less than 10 wt.-% of a calcium aluminate cement or a calcium sulfoaluminate cement if shorter setting times and higher early age strength development are for example required.

In the invention, the cement may comprise a material containing calcium carbonate, for example limestone (as defined in the European NF EN 197-1 Standard paragraph 5.2.6), limestone components (as defined in the "Concrete" NF P 18-508 Standard). The material containing calcium carbonate can be part of the cement or can be added to CEM I prior to preparing the cement slurry.

Setting: is the changeover from the liquid or paste state to the solid state. Setting is followed or accompanied by a hardening phenomenon whereby the material acquires mechanical properties. Hardening generally occurs on completion of setting, in particular for cement.

Mineral addition: The mineral addition comprises:

- one or at least one of the following components: blast furnace slag (as defined in the European NF EN 197-1 Standard of April 2012, paragraph 5.2.2), pozzolanic materials (as defined in the European NF EN 197-1 Standard of April 2012, paragraph 5.2.3), fly ash (as described in the European NF EN 197-1 Standard of April 2012, paragraph 5.2.4), calcined clays, calcined schists (as described in the European NF EN 197-1 Standard of April 2012, paragraph 5.2.5), material containing calcium carbonate, for example limestone (as defined in the European NF EN 197-1 Standard paragraph 5.2.6), limestone components (as defined in the "Concrete" NF P 18-508 Standard), silica fume (as defined in the European NF EN 197-1 Standard of April 2012, paragraph 5.2.7), siliceous components (as defined in the "Concrete" NF P 18-509 Standard), ground steel slag, electric arc slag, metakaolin, or mixtures thereof.
- a cementitious waste, such as recycled concrete according to PR NF EN 197-6 of March 2023 or dust, such as bypass dust.

- or mixtures thereof.

Cement slurry: The expression "cement slurry" designates a mixture comprising water and cement.

The terms "slurry of cement" and "cement slurry" have the same meaning and will be used interchangeably.

Aqueous foam: The expression "aqueous foam" designates a foam produced by combining water and a foaming agent then introducing a gas, generally air.

Foamed cement slurry: The expression "foamed cement slurry" designates a fresh foam comprising water and cement, mixed with gas bubbles, generally air. The foam will also comprise additional components, as disclosed below.

The foamed cement slurry can result from the mixing of a cement slurry and an aqueous foam.

The foamed cement slurry can also be produced from a gas-forming agent selected from hydrogen peroxide, peroxomonosulphuric acid, peroxodisulfphuric acid, alkaline peroxides, alkaline earth peroxides, organic peroxide, particles of aluminium, or mixtures thereof. In that case, the addition of the gas-forming agent to the cement slurry leads to the formation of a foaming cement slurry which expands to form a slurry of foamed cement.

The expressions "foamed cement slurry" and "fresh mineral foam" may be used interchangeably.

Mineral foam: a mineral foam is a set (i.e. hardened) foamed cement slurry. The expression "mineral foam" and "mineral cement foam" may be used interchangeably.

Surprisingly, the inventors developed a method of capturing and sequestering carbon dioxide ($CO_2$) contained in a gaseous environment by means of a carbonatable mineral foam, said method being simple, economic and allowing to capture and sequester $CO_2$ efficiently.

Compared to unfoamed mineral materials, the sequestering capability and kinetics of the carbonatable mineral foam is increased.

In addition, the method allows recycling cementitious waste by incorporating them in the carbonatable foam.

Without wishing being bound by any theory, the inventors believe that the porous structure of the carbonatable mineral foams eases the diffusion of $CO_2$ through the mineral foam, thus its sequestering within the foam. The high $CO_2$ sequestering capacity is also due to the composition of the mineral foam of the invention.

A synergistic effect is obtained due to the foam porous structure and to its composition.

The carbonatable mineral foams produced according to the method of the invention can have connected porosity or unconnected porosity.

The present disclosure relates to a method of capturing and sequestering carbon dioxide ($CO_2$) contained in a gaseous environment by means of a carbonatable mineral foam, the method comprising exposing a slurry of foamed cement or a set slurry of foamed cement to a gaseous environment containing carbon dioxide in an amount higher than 500 ppm, the slurry of foamed cement comprising water and a cement.

## Cement

The cement has the definition provided above.

Advantageously, the cement comprises a source of calcium carbonate, for example limestone (for example, as defined in the European NF EN 197-1 Standard paragraph 5.2.6), limestone components (for example, as defined in the "Concrete" NF P 18-508 Standard).

Advantageously, the cement comprises limestone in an amount comprised between 5% and 20% by weight of the cement.

Advantageously, the cement comprises Portland clinker in an amount comprised between 15% and 95% by weight of the cement.

Advantageously, the cement further comprises one or several mineral additions as defined above.

Advantageously, the mineral addition is present in the cement between 20% and 85%, preferably between 40% and 80%, even more preferably between 40% and 70% or 60% and 80% in weight of the cement.

Among the mineral additions, EAF slag, steel slag and bypass dusts are preferred.

Slag is generally obtained by rapid cooling of molten slag resulting from melting of iron ore in a furnace. Ground granulated blast furnace slag is generally used. Slag can also be obtained by electric arc furnaces, and such slags are a non-metallic by-product that consists mainly of silicates and oxides formed during the process of refining the molten steel. The feed materials for electric arc furnace slags are mainly steel scrap and pig iron.

EAF slags and steel slags are preferred.

Advantageously, the mineral addition is EAF slag and the EAF slag content in the cement is comprised between 20% and 85%, preferably between 40% and 80%, even more preferably between 40% and 70% or 60% and 80% in weight of the cement.

The mineral addition can be a cementitious waste, such as bypass dusts.

Advantageously, the cement comprises:

- 5-15% limestone;
- 40-70% mineral addition;
- 10-50% CEM I or Portland clinker;

in weight % of the cement, the sum being higher than 95%.

Advantageously, the cement comprises:

- 5-15% limestone;
- 40-70% EAF slag;
- 10-50% CEM I or Portland clinker;

in weight % of the cement, the sum being higher than 95%.

Advantageously, the cement comprises:

- 5-15% limestone;
- 60-80% mineral addition;
- 10-50% CEM I or Portland clinker;

in weight % of the cement, the sum being higher than 95%.

Advantageously, the cement comprises:

- 5-15% limestone;
- 60-80% EAF slag;
- 10-50% CEM I or Portland clinker;

in weight % of the cement, the sum being higher than 95%.

All mineral additions except silica fume are advantageously composed of particles that have a D50 generally comprised between 0.1 to 200 um, preferably from 0.1 to 150 μm, more preferably from 1 um and 100 um.

The D50, also noted as Dv50, corresponds to the 50th percentile of the size distribution of the particles, by volume; that is, 50% of the particles have a size that is less than or equal to D50 and 50% of the particles have a size that is greater than D50.

Advantageously, the cement has a specific surface (Blaine) of from 3000 to 10000 $cm^2/g$, preferably from 3500 to 6000 $cm^2/g$.

The slurry of foamed cement can be obtained by any method known in the art. In particular, it can result from the mixing of a cement slurry and an aqueous foam or it can be produced by adding a gas-forming agent to a cement slurry.

According to an embodiment of the invention, the method comprises the following steps:

(i) separately preparing a slurry of a cement and an aqueous foam, wherein the cement slurry comprises water and a cement;
(ii) contacting the slurry of cement with the aqueous foam to obtain a slurry of foamed cement;
(iii) casting the slurry of foamed cement or filling a cavity with the slurry of foamed cement;
(iv) optionally, leaving the slurry of foamed cement to set, partially or totally;
(v) exposing the slurry of foamed cement obtained after step (iii) or the partially or totally set slurry of foamed cement obtained after step (iv) to a gaseous environment containing carbon dioxide in an amount higher than 500 ppm.

According to another embodiment of the invention, the method comprises the following steps:

(j) separately preparing a slurry of a cement and a gas-forming liquid comprising a gas-forming agent, wherein the cement slurry comprises water and a cement;
(jj) contacting the slurry of cement with the gas-forming liquid to obtain a foaming cement slurry;
(jjj) casting the foaming cement slurry or filling a cavity with the foaming cement slurry and leaving the foaming slurry to expand to obtain a slurry of foamed cement;
(jjjj) optionally, leaving the slurry of foamed cement to set, partially or totally;
(jjjjj) exposing the slurry of foamed cement obtained after step (jjj) or the partially or totally set slurry of foamed cement obtained after step (jjjj) to a gaseous environment containing carbon dioxide in an amount higher than 500 ppm.

The steps corresponding to both embodiments are described below.

**Steps (i) to (iii):**

**Cement slurry of step (i):**

The cement slurry comprises water and a cement as described above.

The water/cement ratio of the cement slurry used in step (i) is preferably from 0.25 to 0.7, more preferably from 0.28 to 0.6, even more preferably from 0.29 to 0.45.

The water/cement ratio may be modulated depending on the density of the mineral foam to be obtained.

The cement slurry prepared in step (i) may further comprise a water reducer, such as a plasticiser or a super-plasticiser. A water reducer makes it possible to reduce the amount of mixing water for a given workability by typically 10-15% by weight. Super-plasticisers are capable of reducing water contents of mixing water, for a given workability, by approximately 30% by weight.

By way of example of water reducers, mention may be made of lignosulphonates, hydroxycarboxylic acids, carbohydrates, and other specific organic compounds, for example glycerol, polyvinyl alcohol, sodium alumino-methyl-siliconate, sulfanilic acid and casein as described in the Concrete Admixtures Handbook, Properties Science and Technology, V.S. Ramachandran, Noyes Publications, 1984.

By way of example of a super-plasticiser, the PCP super-plasticisers without an anti-foaming agent may be noted. The term "PCP" or "polyoxy polycarboxylate" is to be understood according to the present invention as a copolymer of acrylic acids or methacrylic acids and their esters of polyoxy ethylene (POE) and/or polyoxy propylene.

Preferably, the cement slurry comprises 0.05 to 0.5 wt.-%, more preferably 0.05 to 0.2 wt.-% of a water reducer, a plasticizer or a superplasticizer, percentage expressed by weight relative to the dry cement weight.

Preferably, the cement slurry does not comprise an anti-foaming agent, or any agent having the property of destabilizing an air/liquid emulsion. Certain commercial super-plasticizers may contain anti-foaming agents and consequently these super-plasticizers are not suitable for the cement slurry used to produce the mineral foam according to the invention.

According to an embodiment of the invention, other additives may be added to the cement slurry or the aqueous foam. Such additives may be thickening agents, viscosity modifying agents, air entraining agents, setting retarders, or their mixtures. Preferably, the additives do not comprise any defoaming agents.

The expression "thickening agent", is generally to be understood as any compound making it possible to maintain the heterogeneous physical phases in equilibrium or facilitate this equilibrium. The suitable thickening agents are preferably gums, cellulose or its derivatives, for example cellulose ethers or carboxy methyl cellulose, starch or its derivatives, gelatine, agar, carrageenans or bentonite clays.

The slurry of foamed cement may comprise a setting retarder. The retarder advantageously corresponds to the definition of the retarder mentioned in the European NF EN 934-2 Standard of September 2002. The retarder used according to the invention can be any one of the retarders disclosed in application WO2022/162176 p.16, 1.10-28. The retarder may for example be selected from sugar and derivatives products or carboxylic acids, such as citric acids and salts thereof.

The slurry of foamed cement advantageously comprises 0.005 to 0.2 % of retarder, more preferably 0.01 to 0.1 %, in % by weight relative to the weight of slurry of foamed cement.

**Aqueous foam of step (i)**

In step (i), the aqueous foam may be produced by combining water and a foaming agent, then introducing a gas. This gas is preferably air. The foaming agent is preferably used in an amount of 0.25 - 5.00 wt.-%, preferably 0.75 - 2.50 wt.-%, (dry weight) of the weight of water.

The slurry of foamed cement may optionally comprise a co-stabiliser. The co-stabiliser is advantageously added in the aqueous foam of step (i), in particular in the aqueous solution comprising the foaming agent.

The introduction of air may be carried out by stirring, by bubbling or by injection under pressure. Preferably, the aqueous foam may be produced using a turbulent foamer (bed of glass beads for example). This type of foamer makes it possible to introduce air under pressure into an aqueous solution comprising a foaming agent.

The aqueous foam may be generated continuously in the process according to the invention.

The foamed cement slurry may also comprise a foaming agent. A foaming agent is generally a compound which modifies the superficial tension between two surfaces, in particular which lowers the superficial tension at the interface between a liquid and a gas, between a liquid and a solid or between two liquids. This compound is also called a surfactant.

Preferably, the foaming agent is an organic protein derivative of animal origin (such as, e.g., the foaming agent named Propump26, a powder of hydrolysed keratin, sold by the company Propump Engineering Ltd) or of vegetable origin. The foaming agents may also be a cationic surfactant (for example cetyltrimethylammonium bromide, CTAB), an ionic surfactant, an amphoteric surfactant (for example cocamidopropyl betaine, CAPB), or a nonionic surfactant, or mixtures

thereof.

Advantageously the foaming agent is a synthetic foaming agent, such as Propump Synthetic B4 sold by the company Propump Engineering Ltd. The use of such a foaming agent allows increasing $CO_2$ uptake by the carbonatable mineral foam.

The co-stabiliser is preferably a polyelectrolyte, in particular a polyanion.

The co-stabiliser is preferentially a polymer having constitutional unit derived from unsaturated carboxylic acid monomer or anhydride thereof. The carboxylic acid monomer can be monocarboxylic acid monomer or dicarboxylic acid monomer. The co-stabilizer can be any one of the co-stabilizers disclosed in application WO2022/162176 p.14, 1.27 - p.15, 1.35.

**Foamed cement slurry - step (ii)**

In step (ii), the cement slurry may be homogenized with the aqueous foam by any means to obtain a slurry of foamed cement. Preferably, step (ii) of the process according to the invention may comprise the introduction of the cement slurry and the aqueous foam into a static mixer to obtain a slurry of foamed cement.

Examples of suitable static mixers are disclosed in WO2022/122760 (p.14, 1.10-27).

The foamed cement slurry can comprise a metal salt selected from manganese, aluminium, magnesium, lithium, calcium, or iron salt and mixtures thereof. The use of a metal salt is particularly advantageous when setting step (iv) as described below is performed. When setting step (iv) is not implemented, advantageously, the foamed cement slurry does not comprise a metal salt.

The metal salt can be added to the foamed cement slurry.

The metal salt is advantageously a metal sulphate.

An aluminium salt is preferred. Preferably, the aluminium salt is aluminium sulphate ($Al_2(SO_4)_3$).

The foamed cement slurry advantageously comprises from 0.15 wt.-% to 5 wt.-%, advantageously 0.15 wt.-% to 3 wt.-%, more advantageously 0.15 wt.-% to 1.5 wt.-% by weight of metal salt relative to the weight of cement.

The mineral foam obtained after step (ii) can have a humid density of 20 to 800 kg/$m^3$, preferably of 20 to 300 kg/$m^3$, more preferably of 100 to 200 kg/$m^3$.

**Foam casting or filling a cavity - step (iii)**

The slurry of foamed cement is cast on a support or used to fill a cavity.

Advantageously, the support is porous or can be detached from the set slurry of foamed cement after step (iv).

When the slurry of foamed cement is filled in a cavity, the cavity can be used as a mold which can remain in place or can be removed after step (iv).

**Steps (j) to (jjj)** :

**Cement slurry of step (j):**

The cement slurry of step (j) is as described above for the cement slurry of step (i).

The cement slurry of step (j) may further comprise:

- ultrafine particles having a liquid-solid contact angle comprised from 30° to 140°, and of which the D50 is comprised from 10 to 600 nm, as described in EP3237353B1.

- a transition metal salt, for example a manganese salt or an iron salt. It may be envisaged that the transition metal salt could be a catalyst precursor facilitating the decomposition of the gas-forming agent into oxygen.

As an example of catalyst precursor, manganese salts and oxides may be cited, such as for example permanganates and manganates, salts and oxides of iron, of cobalt, of copper, of molybdenum, of tungsten, of chromium, of silver and enzymes preferably catalases. In certain cases, the transition metal salt may be supplied by the cement itself, when it is notably a cement containing a lot of iron, whether it is in the form of oxide or not. The catalyst precursor may notably be selected from manganese salts (II) soluble in water, such as manganese acetate (II), manganese sulphate (II), manganese chloride (II) and manganese nitride (II). These salts can decompose, in a basic medium, into insoluble compounds comprising manganese with a +4 degree of oxidation, such as $MnO_2$, which is a known catalyst for the decomposition of peroxides.

**Gas-forming liquid comprising a gas-forming agent of step (j):**

The gas-forming liquid of the present invention comprises a gas forming agent.

Advantageously, the gas-forming agent is in a concentration of less than 15 wt.% of the weight of the gas-forming liquid, preferably less than 8 wt.%. Advantageously, the gas-forming agent comprised in the gas-forming liquid is in a concentration of more than 5 wt.% of the weight of the gas-forming liquid.

Advantageously, the gas-forming agent is hydrogen peroxide, peroxomonosulphuric acid, peroxodisulfphuric acid, alkaline peroxides, alkaline earth peroxides, organic peroxide, particles of aluminium or mixtures thereof.

Preferentially, the gas-forming agent is hydrogen peroxide.

In particular, the gas forming agent is diluted in water. When hydrogen peroxide is used, its concentration is comprised between 5 to 40 wt. %.

In a preferred embodiment of the present invention, the concentration of hydrogen peroxide is comprised between 5 and 15 wt. %, more preferably between 5 and 8 wt. % of the total weight of gas-forming liquid. More preferentially, the concentration of hydrogen peroxide is below 8 wt. % compared to the total weight of gas-forming liquid.

**Foaming cement slurry of step (jj):**

In step (jj), the cement slurry may be homogenized with the gas-forming liquid containing the gas-forming agent by any means to obtain a slurry of foaming cement.

**Foam casting or filling a cavity - step (jjj)**

The slurry of foaming cement is cast on a support or used to fill a cavity and left to expand to obtain a slurry of foamed cement.

Advantageously, the support is porous or can be detached from the set slurry of foamed cement after step (jjjj).

When the slurry of foamed cement is filled in a cavity, the cavity can be used as a mold which can remain in place or can be removed after step (jjjj).

The mineral foam obtained after step (jjj) can have a humid density of 20 to 800 kg/m$^3$, preferably of 20 to 300 kg/m$^3$, more preferably of 100 to 200 kg/m$^3$.

**Foam setting - step (iv) or (jjjj)**

The method may further comprise a step (iv) or (jjjj), respectively after step (iii) and before step (v) or after step (jjj) and before step (jjjjj), of leaving the slurry of foamed cement to set, partially or totally.

The expression 'totally set' means that the mineral foam has undergone a full setting, i.e. that the mineral foam is solid.

Typically, a full setting of the slurry of foamed cement occurs between 24h and 48h after step (iii) or (jjj) respectively.

Advantageously, the slurry of foamed cement is left to set between 30 minutes and 17 hours, preferably between 1 hour and 6 hours.

Surprisingly, the inventors discovered that a full setting of the mineral foam is not necessary before step (v) or step (jjjjj) respectively and is even not advantageous to obtain a high level of carbonation of the mineral foam and thus a high sequestering capacity.

The setting step of step (iv) or step (jjjj) respectively can occur directly in the equipment/location where the set slurry of foamed cement will be afterwards exposed to the gaseous environment.

The setting step can also occur in another location. In that case, the set slurry of foamed cement is then placed in step (v) or in step (jjjjj) respectively in the gaseous environment containing $CO_2$.

**Exposing the slurry of foamed cement obtained after step (iii) or step (jjj) or the partially or totally set slurry of foamed cement obtained after step (iv) or step (jjjj) to a gaseous environment containing carbon dioxide - respective step (v) or step (jjjjj)**:

The slurry of foamed cement obtained after step (iii) or step (jjj) can be exposed to the gaseous environment immediately, i.e. without respective setting step (iv) or (jjjj), or can be left to set, partially or totally, as described respectively in setting step (iv) or(jjjj).

The gaseous environment of step (v) or (jjjjj) can be any gaseous environment containing $CO_2$, in particular any environment containing more than 500ppm of $CO_2$.

Advantageously, the $CO_2$ concentration in the gaseous environment can range from 5 to 100%, preferably from

10% to 100% in volume compared to the total volume of the gaseous environment.

The invention is particularly useful to treat gaseous effluent from industrial plants, in particular a gas effluent from cement kiln.

The slurry of foamed cement or the partially or totally set slurry of foamed cement can be exposed to the gaseous environment until full carbonation. Full carbonation is obtained when the percentage of $CO_2$ captured by the mineral foam remains substantially constant over time.

Time for full carbonation depends on the $CO_2$ content in the gaseous environment.

The higher the $CO_2$ content, the shorter the time necessary for full carbonation.

For instance, the slurry of foamed cement or the partially or totally set slurry of foamed cement can be placed in the gaseous environment containing carbon dioxide at a concentration of at least 500 ppm for between 1 hour and 24 hours or between 1 hour and 6 hours.

Advantageously, the slurry of foamed cement or the partially or totally set slurry of foamed cement is placed in the gaseous environment containing carbon dioxide at a concentration from 5 to 100%, preferably from 10% to 100% in volume compared to the total volume of the gaseous environment between 1 hour and 24 hours or between 1 hour and 6 hours.

Surprisingly, the inventors discovered that full carbonation occurs faster when the slurry of foamed cement is not fully set when it is exposed to the gaseous environment containing $CO_2$.

In an embodiment of the invention, the slurry of foamed cement or the partially or totally set slurry of foamed cement is traversed by the gaseous environment containing $CO_2$.

In an embodiment of the invention, the gaseous environment can traverse several separate slurries of foamed cement and/or partially or totally set slurries of foamed cement, such as several separate layers of set slurries, to increase the $CO_2$ sequestering capacity.

The carbonatable mineral foam can sequester up to 20%, up to 25% in weight of $CO_2$ relatively to the weight of the mineral foam before carbonatation.

Gaseous effluents can also contain other noxious gases and/or heavy metals.

Advantageously, the method according to the invention can be used for capturing nitrogen oxides (NOx), sulfur oxides (SOx) and/or heavy metals contained in such gaseous effluents.

<u>EXAMPLES</u>

Materials

Cement is CEM 1 52.5 N from Le Teil cement plant (Lafarge France).

Limestone is Mikhart 1 supplied by La ProvenÇ ale or Socal P2 supplied by Imerys.

Mineral component:

- EAF (Electrical Arc Furnace) slag
- Cement bypass dust (BPD)

Foaming agents:

- Prompump 26 from the Propump Engineering Ltd named as "Propump 26" in the following tables. Prompump 26 is an organic protein derivative of animal origin with an average molecular weight of 6000 Daltons.
- Propump Synthetic B4 from the Propump Engineering Ltd named as "Propump B4" in the following tables. Propump Synthetic B4 is a amphoteric surfactant, with 30 to 60% of 1-Propanaminium, 3-amino-N-(carboxymethyl)-N,N-dimethyl-, N-(C12-18(even numbered) acyl) derivs., hydroxides, inner salts, whose formula (I) is represented below.

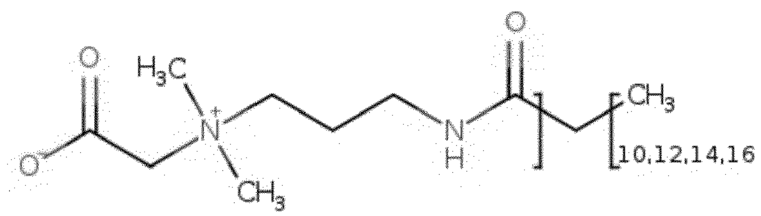

(I)

Equipment

The Rayneri mixer:

- A Turbotest mixer (MEXP-101, model: Turbotest 33/300, Serial N°: 123861) supplied by the company Rayneri, which is a mixer with a vertical axis.

Pumps:

- A pump having an eccentric screw conveyer Seepex™ of the type MD 006-24, commission no. 244920.
- A pump having an eccentric screw conveyer Seepex™ of the type MD 006-24, commission no. 278702.

Foamer:

- A foamer comprising a bed of glass beads of the type SB30 having a diameter of 0.8 - 2.5 mm filled up in a tube having a length of 100 mm and a diameter of 12 mm.

Static mixer:

- A static mixer comprised of 32 helicoidal elements of the type Kenics having a diameter of 19 mm and referred to as 16La632 at ISOJET.

Preparation of cement slurry

Water is added to the cement detailed in the tables below with a ratio water/cement of 0.32.
The cement slurry has been prepared by using the mixer Rayneri Turbotest 33/300, into which tap water has first been introduced. While mixing at 1000 rpm, the solid components have progressively been added. The cement slurry was then mixed for two additional minutes.

Preparation of the foaming solution

A foaming solution, i.e. an aqueous solution containing the foaming agents, was prepared using the following amounts of materials.
For one liter of foaming solution:

| | |
|---|---|
| Foaming agent | 25 g |
| Tap water | 975 g |

The foaming solution was pumped by means of a volumetric pump having an eccentric screw conveyor Seed TM MD-006-24 (commission no: 278702).
This foaming solution was introduced into the foamer through the bed of beads by means of pressurized air (1-6 bar) and a T-junction. The aqueous foam was produced in a continuous way at a rate of 8 litres per minute, having a density of 45 kg/m$^3$.

Preparation of the fresh mineral foam

The aqueous foam as previously obtained, was brought into contact with the cement slurry each other in a static mixer and a slurry of foamed cement was obtained. The flow rate of the aqueous foam into the static mixer is of 377 g per minute.
The slurry rate is adjusted to obtain the humid density target of 220 kg/m$^3$.

Preparation of mineral foam cubes

The slurry of foamed cement was poured into cubes made of polystyrene having a dimension of 10x10x10 cm.

Preparation of pastes

When pastes (unfoamed wet powders) are produced, the solid components are manually mixed with at a temperature of 20°C.

Process of carbonation of samples

The samples are introduced in a commercially available drum, which allows to operate in a controlled environment (composition, pressure, relative humidity) thanks to gas connections (inlet and outlet).

Here the gas used is a $CO_2$ gas flow (pure $CO_2$) or in a gas flow of 80% vol air / 20% vol $CO_2$.

The gas flow may be pre-saturated with water vapor before its introduction into the chamber of the incubator. A vacuum pump is used to flush the initial air in the chamber of the incubator with the gas flow.

The relative humidity is also maintained constant thanks to a tank of deionized water laid on the bottom of the drum.

The relative humidity is maintained constant at 80%and the temperature is kept constant in a range from 20°C to 80°C depending on the test.

Further information on the curing process:

Gas:

- Pressure: atmospheric pressure, with slight overpressure to sustain flow (flow with one input, one output)
- $CO_2$ : 20% or 100% by volume of the dry gas composition
- Temperature: 20°C or 70°C

Flow:

- Regulation of inlet flow rate of 0.5 L_gas/L_sample/h to 5 L_gas/L_sample/h (or 10 to 100 hPa difference + $CO_2$ concentration) according to material

Chamber:

- Ventilation 100 $m^3$/h
- Fan location all along the height of the chamber to favor cells
- Tight chamber with control leakages (qualification)

Measurements:

- Inlet and Outlet flow meters
- $CO_2$ concentration of dry gas at inlet and outlet is measured
- $CO_2$ sensors to measure $CO_2$ within chamber (N sensor per unit volume)
- Temperature

Method of measurement of hydration and carbonation ($CO_2$) amount by loss-on-ignition

A/ Total mass gain with respect to cement in the mix.

The total mass gain (Δm, see eq. (3)) is related to both bound water ($\Delta m_H_2O$) and bound $CO_2$ ($\Delta m_CO_2$) with respect to the cement [g/g of cement].

After carbonation, the samples are dried at 105°C to get the final dry mass noted m_f,dry, expressed in grams [g]

The mass of the samples after mixing and before carbonation is known, it is noted m_0,wet and expressed in grams [g]

The mass of the solid, i.e. the dry mass, is calculated from initial mix composition, it is noted m_0,dry and expressed in grams [g]

The weight fraction of cement in the solid mix is known (see Table 1), it is noted m_cem and is a mass ratio in [g/g] Equation 3:

$$\Delta m = (m_{fdry} - m_{0,dry})/m_{0,dry} \ x \ 1/m_{cem} \quad (3)$$

B/ $CO_2$ mass gain with respect to cement in the mix:
The bound water content and bound $CO_2$ content with respect to the mass of samples is also calculated from the measured mass of samples, respectively at 550°C and 900°C. The mass difference of samples between 105°C and 550°C is related to bound water content (see eq. (4)) whereas the mass loss of samples between 550°C and 900°C is related to $CO_2$ content (see eq. (5)).
Equation 4:

$$\Delta m_{H2O} = (m_{f,105} - m_{f,550})/m_{f,900} \ x \ m_{f,900}/m_{0,dry} \ x \ 1/m_{cem} \quad (4)$$

Equation 5:

$$\Delta m_{CO2} = (m_{f,550} - m_{f,900})/m_{f,950} \ x \ m_{f,900}/m_{0,dry} \ x \ 1/m_{cem} \quad (5)$$

The carbonation amount can also be measured by Thermogravimetric analysis (TGA) from 30°C to 1000°C. The percentage of carbonation is calculated from the loss of mass of the sample between 500°C and 1000°C.

The experiment can be performed on the mineral foam before carbonation and after carbonation.

The percentage of $CO_2$ captured corresponds to the difference between the percentage of $CO_2$ in the mineral foam after carbonation and before carbonation determined experimentally using the methods described above.

The percentage of $CO_2$ before carbonation can also be determined theoretically. It can be calculated from the weight ratio of each component and the $CO_2$ content of each component (measured content or calculated content) of the mineral foam.

The $CO_2$ content of the mineral components (measured $CO_2$ content) and of the limestone filler (calculated CO2 content) used in the experiments are given below.

Table 1: percentage of $CO_2$ measured experimentally for EAF slag and bypass dust

| | % $CO_2$ (measured) |
|---|---|
| EAF slag | 9.0% |
| BPD | 5.8% |

%$CO_2$ is calculated for the limestone filler:

molecular weight of Limestone filler =100 g/mol
molecular weight of $CO_2$ = 44 g/mol
% of $CO_2$ in Limestone filler = 44/100 = 44%

Method of measurement of compressive strength on mineral foams:

Compressive strength is measured on cubic sample of mineral foam (10x10x10 cm) after hydration step or after carbonatation step with a universal testing machine supply by Ibertest - Zwick with a load cell of 1 kN. Every sample is tested under a compressive load and maximal load strength is registred. Compressive strength in kPa is calculated. For each test, 5 samples are tested, mean and standard deviation are calculated.

The results

The results are presented in the tables below.

- experiments with 100% $CO_2$ inlet gas:

  o aqueous foams with Propump 26 according to the invention (F1/F2 and F3) with EAF slag with 24 hours of carbonatation:

The table below lists the composition and results of foams according to the invention.

Table 2: percentage of $CO_2$ captured by mineral foams F1/F2 and F3 according to the method of the invention

| Example | | F1 | F2 | F3 |
|---|---|---|---|---|
| Composition | Cement | 90 | 90 | 44 |
| | Limestone Mikhart1 | 10 | 10 | 10 |
| | EAF Slag | | | 46 |
| $\%CO_2$ (before carbonation) | | 10, 0 | 10, 0 | 10,8 |
| Carbonation temperature | | 20°C | 70°C | 70°C |
| % $CO_2$ after carbonatation | Hydration 1 hour | 27,6 | 27,4 | 29, 9 |
| | Hydration 6 hours | n.m. | n.m. | 30,1 |
| | Hydration 24 hours (1day) | 22,8 | 26,3 | 26,5 |
| | Hydration 144 hours (6 days) | 21,4 | 26,2 | n.m. |
| $\%CO_2$ (captured) | Hydration 1 hour | 17,6 | 17,4 | 19,1 |
| | Hydration 6 hours | n.m. | n.m. | 19,3 |
| | Hydration 24 hours (1day) | 12,8 | 16,3 | 15,7 |
| | Hydration144 hours (6 days) | 11,4 | 16, 2 | n.m. |
| n.m. = not measured | | | | |

Compositions with CEM I and EAF slag (F3) exhibit high sequestering capacity, slightly higher than compositions without slag (F1 and F2).

The results also show that $CO_2$ capture is increasing for the formulations if foam setting (before carbonatation in the oven) is 1 hour or 6 hours in comparison to 1 day or 6 days: a full setting of the foam is thus not necessary to optimize $CO_2$ capture.

The effect of the duration of setting (hydration) with the carbonation for 24h with 100%$CO_2$ for formulation F1 to F3 is illustrated on Figure 1 (% $CO_2$ after carbonation) and Figure 2 (% CO2 captured).

◦ aqueous foams with propump 26 according to the invention (F1 and F4-F9) with different duration time of carbonatation:

Table 3: percentage of $CO_2$ captured by mineral foams F1 and F4-F9 according to the method of the invention

| Example | | F1 | F4 | F5 | F6 | F7 | F8 | F9 |
|---|---|---|---|---|---|---|---|---|
| Composi tion | Cement | 90 | 90 | 90 | 90 | 90 | 90 | 90 |
| | Limestone Mikhart1 | 10 | 10 | 10 | 10 | 10 | 10 | 10 |
| | EAF Slag | - | - | - | - | - | - | - |
| $\%CO_2$ (before carbonation) | | 10,0 | 9,7 | 9,7 | 9,5 | 9,7 | 9,5 | 9,7 |
| Carbonation duration | | 24 | 1 | 3 | 4 | 5 | 17 | 19 |
| % $CO_2$ after carbona tation | Hydration 1 hour | 27,4 | 18, 6 | 25,8 | n.m. | 26,2 | n.m . | n.m. |
| | Hydration 6 hours | 26,3 | n.m. | n.m. | n.m. | n.m. | n.m . | n.m. |
| | Hydration 24 hours (1day) | n.m. | n.m. | n.m. | 22,9 | n.m. | 27, 7 | 28,4 |
| | Hydration 144 hours (6 days) | 26,2 | n.m. | n.m. | n.m. | n.m. | n.m | n.m. |

(continued)

| Example | | F1 | F4 | F5 | F6 | F7 | F8 | F9 |
|---|---|---|---|---|---|---|---|---|
| $\%CO_2$ (captur ed) | Hydration 1 hour | 17,4 | 8,9 | 16,1 | n.m. | 16,5 | n.m . | n.m. |
| | Hydration 6 hours | 16,3 | n.m. | n.m. | n.m. | n.m. | n.m . | n.m. |
| | Hydration 24 hours (1day) | n.m. | n.m. | n.m. | 13,4 | n.m. | 18, 2 | 18,7 |
| | Hydration 144 hours (6 days) | 16,2 | n.m. | n.m. | n.m. | n.m. | n.m | n.m. |
| n.m. = not measured | | | | | | | | |

The effect of the carbonation duration on the $CO_2$ after carbonation and the $CO_2$ captured for formulations F1 and F4/F9 is illustrated respectively on Figures 3 and 4.

The results show that with 24h of hydration, the carbonation time to reach the plateau needs to be between 4hours and 17hours (F1) while after 1hour of hydration, 3hours of carbonatation is sufficient to reach the plateau (F5).

The carbonation time with 100% $CO_2$ required to reach the plateau can be reduced by reducing the duration of hydration.

Comparative compressive strengths after hydration before carbonation and after carbonation have been measured on samples F3 and samples F8 (see table 4).

Table 4: compressive strengths after hydration before carbonation and after carbonation on samples F3 and samples F8

| | | F3 | F8 |
|---|---|---|---|
| Composition (%) | Cement | 44 | 90 |
| | Limestone Mikhart1 | 10 | 10 |
| | EAF Slag | 46 | |
| Compressive strength mean of 5 samples) | Before carbonation | 85 ± 6 kPa | 145 ± 5 kPa |
| | After carbonation 24h | 134 ± 10 kPa | 136 ± 14 kPa |

The comparative compressive strength of sample F3 and sample F8 is illustrated in Figure 5.

Compressive strength of mineral foam with EAF slag after carbonation (F3) is at the same level as compressive strength of mineral foam without EAF slag (F8).

o aqueous foams with Propump 26 according to the invention (F10/F11) with BPD:

Table 5: percentage of $CO_2$ captured by mineral foams F10 and F11 according to the method of the invention

| Example | | F10 | F11 |
|---|---|---|---|
| Composition | Cement | 20 | 10 |
| | Limestone Socal P2 | 10 | 10 |
| | BPD | 70 | 80 |
| $\%CO_2$ (before carbonation) | | 13,5 | 12,1 |
| Carbonation duration (h) | | 24 | 24 |
| % $CO_2$ after carbonatation | Hydration 1hour | 29,0 | 29,3 |
| $\%CO_2$ (captured) | Hydration 1hour | 15,5 | 17,2 |

Compositions with CEM I and BPD (F10 and F11) exhibits high sequestering capacity, similar to the composition without BPD (F1) .

◦ Comparative example with pastes (unfoamed compositions)

The table below lists the composition and results for pastes.

Table 6: percentage of $CO_2$ captured by pastes P1 and P2 (comparative example)

| | P1 | P2 |
|---|---|---|
| CEM I | 40 | 20 |
| EAF slag | 60 | 80 |
| % $CO_2$ (before carbonation) | 5.4 (theoretical) | 7.2 (theoretical) |
| % $CO_2$ (after 24h carbonation) / no hydration | 19.0 | 10.7 |
| % $CO_2$ (captured) | 13.6 | 3.5 |

The mineral foams according to the invention have a higher sequestering capacity compared to pastes.

◦ Comparative example C4 according to prior art (WO2022253592)

A foam was prepared according to the process described for the F1 composition by mixing the cement slurry with an aqueous foam prepared with carbonated water (saturated with $CO_2$) instead of air.
After 24 hours of hydration, without external carbonation, the $CO_2$ uptake is only 0,4%.
Higher carbonation is obtained with external carbonatation after foam formation in comparison to using carbonated water for foam formation as described in WO2022253592 patent application.

- experiments with 20% $CO_2$ / 80% air inlet gas:

Mineral foams according to the invention.
The values of $CO_2$ uptake in the table below are given comparatively to the values obtained for the pastes (unfoamed products having the same cement) simply mixed with water used as reference.
The positive values thus show the increase of $CO_2$ sequestering ability for the mineral foams compared to the unfoamed pastes.

| | F13 | F13' | F14 | F14' |
|---|---|---|---|---|
| CEM I | 54 | 54 | 34 | 34 |
| Calcium carbonate | 10 | 10 | 10 | 10 |
| EAF slag | 36 | 36 | 56 | 56 |
| Foaming agent used | Prompump 26 | Propump B4 | Propump 26 | Propump B4 |
| % $CO_2$ (captured) vs reference - 1 h setting then 6 hours in 20% $CO_2$ atmosphere | + 5.3 | + 7.3 | + 7.4 | + 10.2 |

The use of Propump B4 (used in mineral foams F13' and F14')vs Propump 26 (used in mineral foams F13 and F14)as foaming agent increases the carbonation level and the sequestering capacity.

## Claims

**1.** A method of capturing and sequestering carbon dioxide ($CO_2$) contained in a gaseous environment by means of a carbonatable mineral foam, the method comprising exposing a slurry of foamed cement or a set slurry of foamed cement to a gaseous environment containing carbon dioxide in an amount higher than 500 ppm, the slurry of foamed cement comprising water and a cement.

**2.** The method according to claim 1 wherein the cement further comprises a source of calcium carbonate such as limestone.

**3.** The method according to claim 1 or 2 comprising the following steps:

(i) separately preparing a slurry of a cement and an aqueous foam, wherein the cement slurry comprises water and a cement;
(ii) contacting the slurry of cement with the aqueous foam to obtain a slurry of foamed cement;
(iii) casting the slurry of foamed cement or filling a cavity with the slurry of foamed cement;
(iv) optionally, leaving the slurry of foamed cement to set, partially or totally;
(v) exposing the slurry of foamed cement obtained after step (iii) or the partially or totally set slurry of foamed cement obtained after step (iv) to a gaseous environment containing carbon dioxide in an amount higher than 500 ppm.

**4.** The method according to claim 1 or 2 comprising the following steps:

(j) separately preparing a slurry of a cement and a gas-forming liquid comprising a gas-forming agent, wherein the cement slurry comprises water and a cement;
(jj) contacting the slurry of cement with the gas-forming liquid to obtain a foaming cement slurry;
(jjj) casting the foaming cement slurry or filling a cavity with the foaming cement slurry and leaving the foaming slurry to expand to obtain a slurry of foamed cement;
(jjjj) optionally, leaving the slurry of foamed cement to set, partially or totally;
(jjjjj) exposing the slurry of foamed cement obtained after step (jjj) or the partially or totally set slurry of foamed cement obtained after step (jjjj) to a gaseous environment containing carbon dioxide in an amount higher than 500 ppm.

**5.** The method according to anyone of claims 1 to 4, wherein the cement comprises limestone in an amount comprised between 5% and 20% by weight of cement.

**6.** The method according to anyone of claims 1 to 5, wherein the cement further comprises a mineral addition.

**7.** The method according to claim 6 wherein the mineral addition is EAF slag, steel slag, or bypass dusts.

**8.** The method according to claim 7 wherein the mineral addition is EAF slag and the EAF slag content in the cement is comprised between 20% and 85%, preferably between 60% and 80% in weight of the cement.

**9.** The method according to claim 3, wherein the aqueous foam in step (i) is produced by combining water and a foaming agent, then introducing a gas, and wherein the foaming agent is preferably an organic protein derivative of animal origin or a synthetic polymer.

**10.** The method according to any one of claims 3 to 9, wherein the slurry of foamed cement in steps (iv) or (jjjj) is left to set between 30 minutes and 17 hours, preferably between 1 hour and 6 hours.

**11.** The method according to any one of claims 1 to 10, wherein the slurry of foamed cement or the partially or totally set slurry of foamed cement is placed in the gaseous environment containing carbon dioxide for a duration comprised between 1 hour and 24 hours, preferably between 1 hour and 6 hours.

**12.** The method according to any one of claims 1 to 11, wherein the gaseous environment containing carbon dioxide is a gaseous effluent, such as a gas effluent from cement kiln.

**13.** The method according to claim 12 for capturing nitrogen oxides (NOx), sulfur oxides (SOx) and/or heavy metals contained in the gaseous effluent.

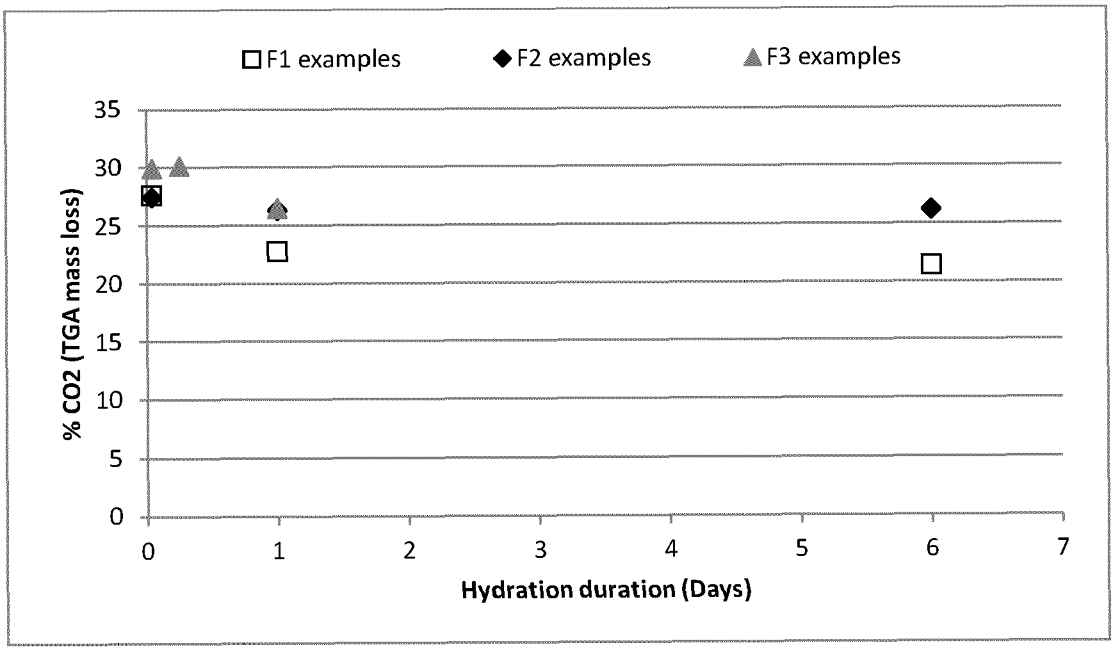


Figure 1

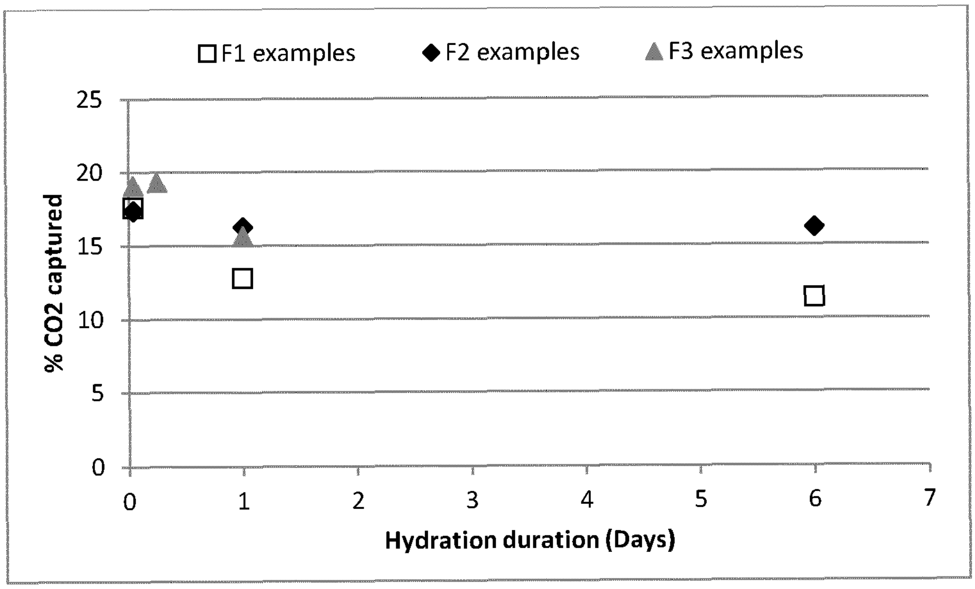


Figure 2

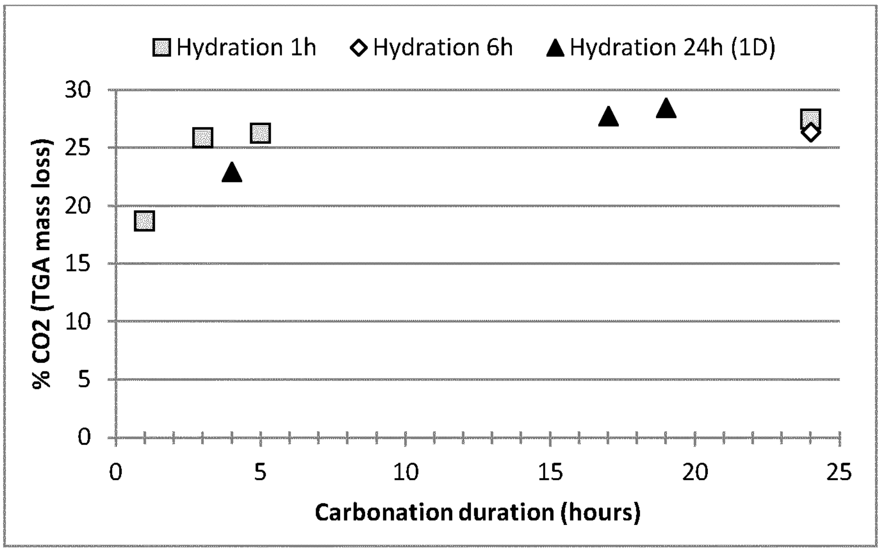


Figure 3

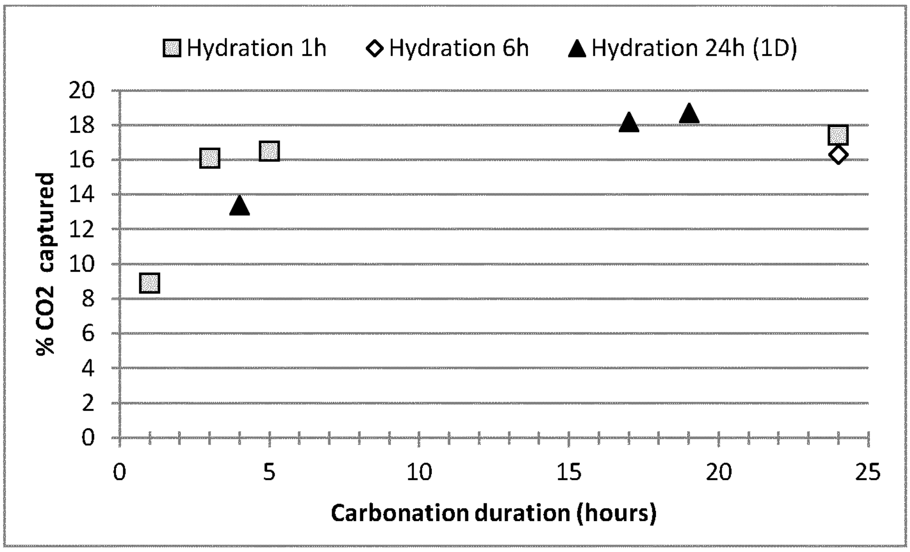


Figure 4

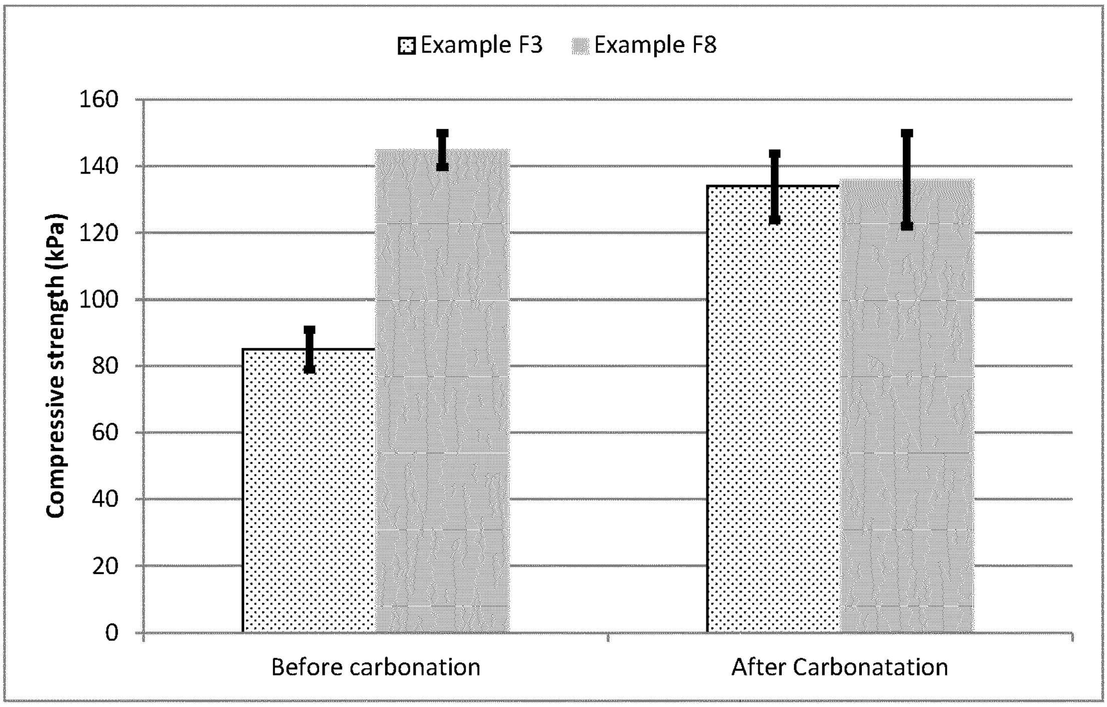
Example F3
Example F8
Compressive strength (kPa)
160
140
120
100
80
60
40
20
0
Before carbonation
After Carbonatation

Figure 5

Europäisches Patentamt
European Patent Office
Office européen des brevets

# EUROPEAN SEARCH REPORT

Application Number
EP 23 30 6893

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | CN 113 956 070 A (HUAXIN CEMENT CO LTD) 21 January 2022 (2022-01-21)<br>* paragraphs [0009] - [0011], [0031] - [0040]; claims 1, 9, 10 * | 1-12<br>13 | INV.<br>B01D53/62<br>B01D53/80<br>C04B28/04<br>C04B40/02 |
| X<br>Y | CN 114 907 068 A (SICHUAN MIANZHU AODONG CEMENT CO LTD) 16 August 2022 (2022-08-16)<br>* paragraphs [0017], [0023] - [0030]; claims 1, 3, 8 * | 1-12<br>13 | |
| X<br>Y | CN 114 656 207 A (GUANGDONG INSTITUTE OF BUILDING MAT CO LTD) 24 June 2022 (2022-06-24)<br>* paragraphs [0049] - [0058]; claims 1-3, 8 * | 1-12<br>13 | |
| X<br>Y<br>A | US 2008/245274 A1 (RAMME BRUCE W [US]) 9 October 2008 (2008-10-09)<br>* paragraphs [0025], [0034], [0040], [0041], [0042], [0043], [0054]; figure 1 * | 1,2, 5-10,12<br>13<br>3,4 | |
| | | | TECHNICAL FIELDS SEARCHED (IPC) |
| Y<br>A | EP 4 241 873 A1 (HEIDELBERG MAT AG [DE]) 13 September 2023 (2023-09-13)<br>* paragraphs [0005], [0006], [0009], [0011], [0015], [0022] * | 13<br>1-12 | B01D<br>G01N<br>B01J<br>C04B<br>F23J |
| Y<br>A | US 2010/068109 A1 (COMRIE DOUGLAS C [US]) 18 March 2010 (2010-03-18)<br>* paragraphs [0014], [0067] - [0070]; claims 25, 26; figure 1 * | 13<br>1-12 | |

The present search report has been drawn up for all claims

1

| Place of search | Date of completion of the search | Examiner |
|---|---|---|
| The Hague | 4 April 2024 | Bocciardo, Davide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 30 6893

This annex lists the patent family members relating to the patent documents cited in the above-mentioned European search report. The members are as contained in the European Patent Office EDP file on
The European Patent Office is in no way liable for these particulars which are merely given for the purpose of information.

04-04-2024

| Patent document cited in search report | | Publication date | Patent family member(s) | | | Publication date |
|---|---|---|---|---|---|---|
| CN 113956070 | A | 21-01-2022 | NONE | | | |
| CN 114907068 | A | 16-08-2022 | NONE | | | |
| CN 114656207 | A | 24-06-2022 | NONE | | | |
| US 2008245274 | A1 | 09-10-2008 | NONE | | | |
| EP 4241873 | A1 | 13-09-2023 | EP | 4241873 | A1 | 13-09-2023 |
| | | | EP | 4241874 | A1 | 13-09-2023 |
| | | | WO | 2023170203 | A1 | 14-09-2023 |
| US 2010068109 | A1 | 18-03-2010 | AU | 2007225296 | A1 | 20-09-2007 |
| | | | BR | PI0708702 | A2 | 07-06-2011 |
| | | | CA | 2646462 | A1 | 20-09-2007 |
| | | | CN | 101400430 | A | 01-04-2009 |
| | | | CN | 102600707 | A | 25-07-2012 |
| | | | EP | 2001577 | A2 | 17-12-2008 |
| | | | EP | 2438976 | A1 | 11-04-2012 |
| | | | EP | 2438977 | A1 | 11-04-2012 |
| | | | EP | 2438978 | A1 | 11-04-2012 |
| | | | EP | 2468388 | A1 | 27-06-2012 |
| | | | EP | 2481472 | A1 | 01-08-2012 |
| | | | ES | 2440804 | T3 | 30-01-2014 |
| | | | ES | 2440946 | T3 | 31-01-2014 |
| | | | ES | 2445340 | T3 | 03-03-2014 |
| | | | ES | 2488825 | T3 | 29-08-2014 |
| | | | ES | 2521415 | T3 | 12-11-2014 |
| | | | ES | 2521590 | T3 | 13-11-2014 |
| | | | JP | 2009529408 | A | 20-08-2009 |
| | | | RU | 2008140176 | A | 20-04-2010 |
| | | | RU | 2011142279 | A | 27-04-2013 |
| | | | US | 2010068109 | A1 | 18-03-2010 |
| | | | US | 2011135548 | A1 | 09-06-2011 |
| | | | US | 2012121488 | A1 | 17-05-2012 |
| | | | WO | 2007106372 | A2 | 20-09-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022268869 A
- WO 2022253592 A
- WO 2022162176 A
- WO 2022122760 A
- EP 3237353 B1


### Non-patent literature cited in the description


- **V.S. RAMACHANDRAN**. Concrete Admixtures Handbook, Properties Science and Technology. Noyes Publications, 1984